# FASCICULE DE BREVET EUROPEEN

(11) **EP 2 294 798 B1**
(45) Date de publication et mention de la délivrance du brevet: **04.07.2018**
(21) Numéro de dépôt: 09730448.9
(22) Date de dépôt: 31.03.2009
(51) Int. Cl.: H04L 29/12, H04L 12/28, H04L 12/701

(54) **PROCEDE DE ROUTAGE D'UN PAQUET DE DONNEES DANS UN RESEAU ET DISPOSITIF ASSOCIE**
VERFAHREN UND ENTSPRECHENDE VORRICHTUNG ZUM ROUTEN EINES DATENPACKETS IN EINEM NETZWERK
METHOD AND RELATED DEVICE FOR ROUTING A DATA PACKET IN A NETWORK

(30) Priorité: 31.03.2008 FR 0852108
(43) Date de publication de la demande: 16.03.2011
(73) Titulaire: Transpacific IP Group Limited, Grand Cayman KY1-1001 (KY)
(72) Inventeur: BOUCADAIR, Mohamed, F-14000 Caen (FR)
(74) Mandataire: Eidelsberg, Olivier Nathan
(86) Numéro de dépôt international: PCT/FR2009/050548
(87) Numéro de publication internationale: WO 2009/125158

(56) Documents cités:
- US-A1- 2002 116 523
- US-A1- 2002 141 389
- US-B1- 6 353 614
- US-B1- 7 320 027

## Description

### Domaine de l'invention

Le domaine de l'invention est celui d'un réseau de télécommunications, en particulier un réseau de télécommunications IP dans lequel sont transportés des paquets de données d'un équipement source vers un équipement de destination identifié par une adresse de destination.

Un tel réseau de télécommunications groupe une pluralité d'équipements, de liens et de fonctions dédiés au transport des données issues d'équipements terminaux connectés à ce réseau. En particulier, les fonctions de transport peuvent être implémentées grâce à l'activation de protocoles de routage et de transmission. Un réseau de télécommunications administré par un opérateur est encore appelé un domaine.

Un fournisseur de service de connectivité IP déploie une architecture dédiée pour permettre aux utilisateurs d'équipements terminaux d'être joignables. L'accès au service de connectivité IP est géré par le fournisseur de service qui s'appuie sur le réseau de télécommunications d'un opérateur pour router les paquets de données émis par les équipements terminaux vers leur destination finale. Dans certains cas, ledit fournisseur de service est aussi l'opérateur de réseau de télécommunications.

L'invention concerne un mécanisme d'allocation d'adresses et de numéros de ports permettant d'affecter une même adresse primaire à une pluralité d'équipements terminaux du réseau de télécommunications.

Ainsi, l'invention s'applique à tout type d'adressage, public ou privé, mais de façon privilégiée mais non limitative aux adresses IP publiques définies par le protocole IPv4 (Internet Protocol version 4).

Une passerelle domestique placée en coupure de flux de paquets de données entre un terminal d'un réseau domestique privé et le réseau de télécommunications public d'un opérateur, qu'on appelle aussi domaine, comporte, de façon connue, une table dans laquelle elle associe l'adresse IP privée et le port associé à ce terminal, avec une adresse IP publique de type IPv4 et un port de cette même passerelle sur le réseau public.

Cette table est connue de l'homme du métier sous l'appellation "table de nattage", cette expression venant de l'acronyme NAT (*Network Address Translation* en anglais).

On connaît également, d'après la demande de brevet US 2002/0141389, un procédé de routage de paquets de données IP dans lequel chaque terminal-client est identifié au moyen de la combinaison d'une adresse IPv4 publique et d'une plage de numéros de port. Selon ce procédé, chaque terminal-client est connecté à une passerelle de service située dans le réseau de l'opérateur, qui met en oeuvre une fonction NAT pour les paquets entrants ou sortants sans modifier leur numéro de port.

Une technique de distribution du traitement NAT à des terminaux-clients partageant une adresse publique commune est aussi décrite dans le brevet US6353614 B1. Il est communément admis par la communauté des fournisseurs de service IP que l'épuisement des adresses IPv4 publiques est une fatalité. Pour éviter ce problème, la communauté s'est mobilisée dans le passé, ce qui a conduit à la définition d'un nouveau protocole IPv6 (*Internet Protocol version 6*), qui offre un grand nombre d'adresses IP et un mécanisme de routage hiérarchique aux performances améliorées. Néanmoins, cette solution n'est en pratique pas activée par les opérateurs, pour des raisons financières ou stratégiques. Ces mêmes fournisseurs ne sont toutefois pas indifférents aux alarmes récemment émis par l'IETF (*Internet Engineering Task Force*), notamment dans des rapports présentés au sein du groupe de travail GROW (*Global Routing Operations Working Group)* concernant un risque d'épuisement des adresses IPv4 de l'IANA fin 2009.

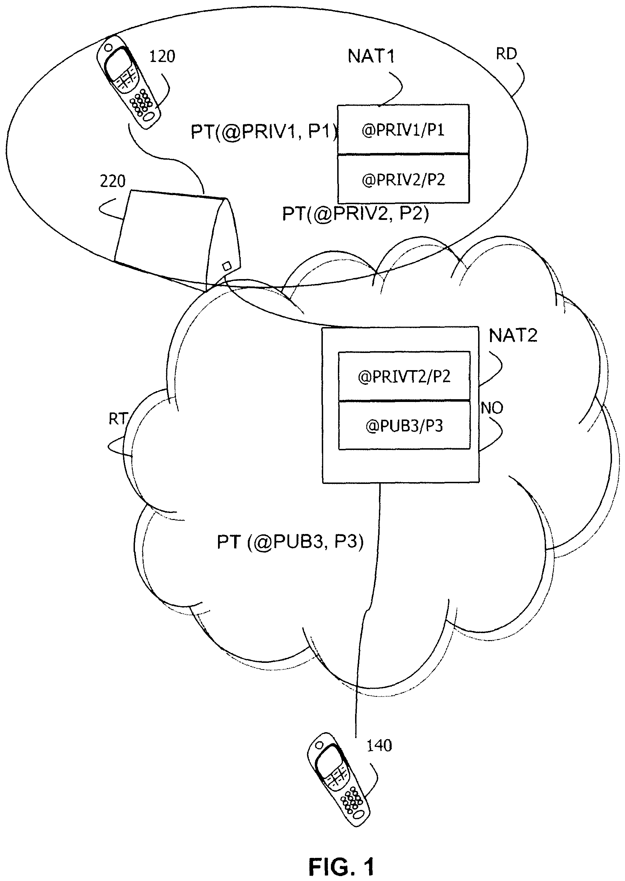

Pour limiter le nombre d'adresses publiques IPv4 nécessaire pour la fourniture d'un service de connectivité IP, une solution de double NAT, appelée aussi NAT opérateur, a été proposée et implémentée. Elle consiste à activer une fonction NAT au sein du réseau de télécommunications de l'opérateur, de telle sorte que les passerelles domestiques utilisent un adressage privé dans leur table de Nattage. En relation avec la **figure 1****,** on considère un équipement terminal 120 dans un réseau domestique RD connecté à une passerelle domestique 220 placée en coupure de flux entre l'équipement terminal et un réseau de télécommunications RT. La passerelle met en oeuvre une première fonction de NAT NAT1 qui traduit un premier couple d'adressage privé d'un paquet de données PT émis par l'équipement terminal 120 en un deuxième couple d'adressage privé (@PRIV2, P2). Elle émet ensuite le paquet PT transformé dans le réseau RT. Ce paquet est reçu par un équipement NO du réseau. Cet équipement NO met en oeuvre une fonction de NAT opérateur NAT2 qui traduit le deuxième couple d'adressage privé (@PRIV2, P2) du paquet de données PT en un troisième couple d'adressage publique (@PUB3, P3). Ainsi, c'est la fonction de NAT de l'opérateur qui assure la traduction des adresses privées des passerelles domestiques vers des adresses publiques, ce qui permet d'économiser un nombre non négligeable d'adresses publiques IPv4.

### Inconvénients de la technique antérieure

La solution de NAT Opérateur présente des inconvénients, parmi lesquels :
- une complexification de l'acheminement des paquets de données IP : du fait de l'introduction d'un deuxième niveau de traduction d'adresses, les paquets de données doivent être modifiés deux fois;
- la nécessité d'adapter la mise en oeuvre de protocoles de signalisation applicative ou ALG (*Application Level Gateway*) conventionnels tels que DNS (*Domain Name System*), FTP (*File Transfer Protocol*) ou encore SIP (*Session Initiation Protocol*). Dans le cas de SIP par exemple, l'établissement et le maintien d'une session de voix sur IP, nécessite que, pour maintenir à jour sa table de Nattage, la passerelle domestique placée en coupure du flux de signalisation SIP force artificiellement, de façon connue, les échanges de signalisation entre le terminal de l'abonné et le réseau public, en imposant une fréquence élevée des requêtes de réenregistrements. En présence d'un double NAT, un tel mécanisme doit aussi être prévu au niveau de l'équipement qui héberge la fonction de NAT Opérateur; et
- une dégradation du service de connectivité IP offert par l'opérateur du réseau public de télécommunications doit être déplorée, notamment parce que des fonctionnalités telles que le "*port forwarding*" ou le *DynDNS* ne peuvent pas être supportées en présence du NAT opérateur.

### Objectifs de l'invention

Il existe donc un besoin de pallier ces inconvénients de l'art antérieur.

Plus précisément, il existe un besoin de fournir une nouvelle solution pour économiser l'usage d'adresses IP publiques, sans entraîner de dégradation du service rendu au terminal client.

### Exposé de l'invention

L'invention répond à ce besoin à l'aide des procédés selon les revendications 1 et 7, du dispositif selon la revendication 5, des équipements selon les revendications 6 et 10, et des produits programmes d'ordinateur selon les revendications 11 et 12.

Le procédé de routage d'un paquet de données dans un réseau de télécommunications, ledit paquet comprenant une adresse primaire de destination différente de l'adresse primaire du dispositif mettant en oeuvre le routage et un numéro de port de destination, comprend sur réception dudit paquet, les étapes suivantes :
- détermination d'un masque de ports définissant une plage de numéros de ports à laquelle appartient le numéro de port de destination;
- sélection d'un identifiant de routage d'un équipement destinataire du paquet parmi une pluralité d'identifiants de routage d'équipements terminaux associés à ladite adresse de destination à partir du masque de ports déterminé; et
- routage du paquet vers l'équipement terminal destinataire à partir dudit identifiant, ladite indication d'adresse primaire de destination étant conservée dans le paquet routé.

Corrélativement, l'invention concerne un dispositif de routage d'un paquet de données IP dans un réseau de télécommunications, ledit paquet comprenant une adresse primaire de destination différente de l'adresse primaire dudit dispositif de routage et un numéro de port de destination, caractérisé en ce que ledit dispositif est apte à mettre en oeuvre, sur réception dudit paquet, les moyens suivants :
- détermination d'un masque de ports définissant une plage de numéros de ports à laquelle appartient le numéro de port de destination;
- sélection d'un identifiant d'un équipement terminal destinataire du paquet parmi une pluralité d'identifiants d'équipements associés à ladite adresse primaire de destination à partir du masque de ports; et
- routage du paquet vers l'équipement terminal destinataire à partir dudit identifiant, ladite indication d'adresse primaire de destination étant conservée dans le paquet routé.
Ainsi, l'invention repose sur une approche tout à fait nouvelle et inventive du routage d'un paquet de données, qui s'appuie sur une combinaison unique constituée de l'adresse de destination du paquet, du masque de ports définissant une plage de numéros de ports qui inclut le numéro de port de destination du paquet reçu et d'un identifiant de routage de l'équipement terminal de destination. L'invention permet donc d'affecter une même adresse primaire et routable dans le réseau de télécommunications, à plusieurs équipements terminaux connectés à ce réseau et donc d'économiser l'usage des adresses IP publiques, sans avoir recours à la solution de NAT opérateur. L'invention constitue donc une solution simple, efficace et dans la continuité des pratiques courantes dans le domaine à l'épuisement des adresses IPv4. Elle permet à un fournisseur d'augmenter son parc de clients de manière significative. Elle ne nécessite pas d'investissements conséquents et permet donc une optimisation de CAPEX (Capital Expenditures) et de l'OPEX (Operative Expenditures),

L'invention s'applique au routage de paquets de données à destination de tout type d'équipement terminal, qu'il soit connecté ou non à un réseau domestique en particulier et de façon non limitative à une passerelle domestique placée en coupure de flux entre un réseau domestique et un réseau de télécommunications public.

Le procédé de routage selon l'invention est mis en oeuvre par un équipement du réseau de télécommunications. Par conséquent, l'invention vise aussi un équipement dans un réseau de télécommunications, apte à recevoir un paquet de données comprenant une adresse de destination et un numéro de port de destination, ledit équipement comprenant un dispositif de routage selon l'invention.

Un tel équipement est donc placé en coupure de tous les flux de données adressés à l'équipement terminal. Il peut s'agir d'un routeur ou d'un équipement dédié du réseau de télécommunications.

De façon avantageuse, l'adresse primaire est une adresse publique. Un avantage de l'utilisation d'un adressage public est d'éviter les traductions d'adresses et les corrections protocolaires à la périphérie d'un domaine administré par un fournisseur de service.

Selon un premier mode de réalisation de l'invention, ledit au moins un identifiant est une adresse secondaire de l'équipement terminal destinataire. Une telle adresse secondaire, aussi appelée adresse privée, n'est pas routable dans tout le réseau de télécommunications. Elle a une portée restreinte, limitée aux échanges de flux entre l'équipement terminal et l'équipement du réseau de télécommunications mettant en oeuvre le procédé selon l'invention. Cette adresse n'est pas annoncée au delà du domaine BGP (Border Gateway Protocol) du réseau de télécommunications d'un opérateur donné.

De façon avantageuse, le procédé comprend en outre, préalablement à l'étape de routage, une étape de transformation du paquet pour y ajouter ladite adresse secondaire et le paquet est routé vers l'équipement terminal destinataire à partir de ladite adresse secondaire.

Selon un aspect du premier mode de réalisation de l'invention, l'étape de transformation consiste en à encapsuler le paquet dans un autre paquet destiné à ladite adresse secondaire.

Un avantage de cette encapsulation est qu'elle ne nécessite pas la modification de la structure interne du paquet. Ainsi, toute opération d'écriture et de calcul d'un nouveau checksum est évitée.

Selon un autre aspect du premier mode de réalisation de l'invention, l'étape de transformation consiste à ajouter l'adresse secondaire de l'équipement destinataire dans un champ du paquet.

Un premier avantage est qu'une telle transformation permet d'optimiser l'utilisation de la bande passante, car elle ne nécessite par l'ajout de deux en-têtes comme le processus d'encapsulation. Un deuxième avantage est qu'elle exploite l'option de routage à la source (source routing) du protocole IP, par exemple.

Selon un deuxième mode de réalisation de l'invention, l'identifiant est un identifiant de route spécifique à cet équipement terminal et le routage du paquet est effectué à partir dudit identifiant de route spécifique. On entend ici par route spécifique, une route dédiée pour joindre cet équipement et qui ne dessert que cet équipement terminal parmi la pluralité d'équipements possédant la même adresse primaire.

Combinée à l'adresse primaire et au masque de ports affecté à l'équipement terminal de destination, cet identifiant de route spécifique permet d'une part d'identifier de façon unique cet équipement et, d'autre part, de router le paquet de données reçu.

Un avantage est qu'aucune transformation du paquet n'est nécessaire. Ce mode de réalisation de l'invention nécessite une ingénierie du réseau de télécommunications sous-jacent de l'opérateur pour pouvoir installer dans l'équipement qui met en oeuvre l'invention des routes disjointes vers des équipements ayant la même adresse primaire.

Dans un mode particulier de réalisation, les différentes étapes du procédé de routage d'un paquet de données sont déterminées par des instructions de programmes d'ordinateurs.

En conséquence, l'invention vise aussi un programme d'ordinateur sur un support d'informations, ce programme étant susceptible d'être mis en oeuvre dans un dispositif de routage ou plus généralement dans un ordinateur, ce programme comportant des instructions adaptées à la mise en oeuvre des étapes d'un procédé de routage tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention concerne également un procédé de configuration d'un équipement terminal connecté à un réseau de télécommunications, comprenant, sur réception d'une requête de configuration émise par ledit équipement, les étapes suivantes :
- affectation d'une adresse primaire audit équipement terminal, ladite adresse primaire étant partagée avec une pluralité d'équipements terminaux ; et
- affectation audit équipement terminal d'un masque de ports définissant une plage de numéros qui lui est dédiée et d'un identifiant de routage; et
- envoi audit équipement terminal d'un message de configuration comprenant ladite adresse primaire, ledit masque de port et ledit identifiant de routage.

Une pluralité d'équipements terminaux configurés selon l'invention reçoit la même adresse primaire. C'est la combinaison de cette adresse primaire, de l'identifiant de routage et du masque de ports qui permet de les identifier individuellement de façon unique.

Selon un aspect de l'invention, le procédé de configuration comprend une étape d'affectation d'un identifiant de dispositif de routage apte à router un paquet de données comprenant ladite adresse primaire comme adresse de destination vers ledit équipement terminal et le message de configuration comprend en outre ledit identifiant de dispositif de routage.

De cette manière, l'équipement terminal connaît l'identité du dispositif de routage des paquets de données qui lui sont destinés.

Selon un aspect de l'invention, ledit message de configuration est envoyé en outre à un équipement du réseau de télécommunications comprenant un dispositif de routage apte à router un paquet de données comprenant ladite adresse primaire comme adresse de destination vers ledit équipement terminal

Le procédé de configuration selon l'invention est mis en oeuvre par un serveur de configuration dans un réseau de télécommunications, apte, sur réception d'une requête de configuration émise par un équipement terminal, à mettre en oeuvre les moyens suivants :
- affectation d'une adresse primaire audit équipement terminal, ladite adresse primaire étant partagée avec une pluralité d'équipements terminaux; et
- affectation audit équipement terminal d'un masque de ports définissant une plage de numéros qui lui est dédiée et d'un identifiant de routage; et
- envoi audit équipement terminal d'un message de configuration comprenant ladite adresse primaire, ledit masque de port et ledit identifiant de routage.

L'invention concerne aussi un procédé de mise en oeuvre d'une configuration par un équipement terminal connecté à un réseau de télécommunications, caractérisé en ce que, sur réception d'un message de configuration comprenant des données de configuration parmi lesquelles une adresse primaire, un masque de port définissant une plage de numéros qui lui est dédiée et un identifiant de routage, ledit procédé comprend les étapes suivantes :
- enregistrement desdites données de configuration;
- préalablement à l'envoi d'un paquet de données dans le réseau de télécommunications, sélection d'un numéro de port dans la plage de numéros de ports définie par le masque de ports, ledit paquet de données comprenant comme adresse source l'adresse primaire dudit équipement terminal et comme numéro de port source le numéro de port sélectionné.

Selon un aspect de l'invention, le procédé de mise en oeuvre d'une configuration comprend en outre une étape d'envoi des données de configuration à un dispositif de routage d'un paquet de données selon l'invention.

Ce dispositif de routage est le dispositif d'attachement de l'équipement terminal. Il voit passer tous les paquets de données destinés à l'équipement terminal.

Selon un autre aspect de l'invention, sur réception d'un paquet de données comprenant une adresse de destination, un numéro de port et un identifiant de routage, ledit procédé comprend en outre une étape de vérification d'une appartenance du numéro de port à la plage de numéros définie par son masque de port et une étape de rejet dudit paquet si la vérification est négative.

Le procédé de mise en oeuvre d'une configuration est avantageusement mis en oeuvre par un équipement terminal client connecté à un réseau de télécommunications, caractérisé en ce que, sur réception d'un message de configuration comprenant des données de configuration parmi lesquelles une adresse primaire partagée avec une pluralité d'équipements terminaux, un masque de ports définissant une plage de numéros qui lui est dédiée et d'un identifiant de routage, il est apte à mettre en oeuvre les moyens suivants :
- enregistrement desdites données de configuration;
- préalablement à l'envoi d'un paquet de données dans le réseau de télécommunications, sélection d'un numéro de port dans la plage de numéros de ports définie par le masque de ports, ledit paquet de données comprenant comme adresse source l'adresse primaire dudit équipement terminal et comme numéro de port source le numéro de port sélectionné.

Dans un mode particulier de réalisation, les différentes étapes du procédé de mise en oeuvre d'une configuration sont déterminées par des instructions de programmes d'ordinateurs.

En conséquence, l'invention vise aussi un programme d'ordinateur sur un support d'informations, ce programme étant susceptible d'être mis en oeuvre dans une passerelle domestique ou plus généralement dans un ordinateur, ce programme comportant des instructions adaptées à la mise en oeuvre des étapes d'un procédé de mise en oeuvre d'une configuration tel que décrit ci-dessus.

L'invention concerne en outre un procédé de traduction d'adresses d'un paquet de données reçu par une passerelle domestique placée en coupure de flux entre un équipement terminal émetteur dudit paquet et un équipement terminal destinataire dudit paquet dans un réseau de télécommunications, ledit paquet comprenant une première adresse et un premier numéro de port de l'équipement terminal émetteur, ledit procédé étant caractérisé en ce qu'il comprend une étape de remplacement de ladite première adresse et du premier numéro de port par une adresse primaire et un deuxième numéro de port, ledit deuxième numéro de port appartenant à une plage de numéros dédiée à ladite passerelle et déterminée par un masque de numéros de ports.

Lorsqu'un équipement terminal se trouve dans un réseau domestique géré par une passerelle domestique, la passerelle domestique configurée selon l'invention met en oeuvre un mécanisme de traduction d'adresses, qui consiste non seulement à remplacer la première adresse de l'équipement terminal par son adresse primaire, mais aussi à sélectionner un numéro de ports dans sa plage dédiée.

Dans un mode particulier de réalisation, les différentes étapes du procédé de traduction d'adresses d'un paquet de données sont déterminées par des instructions de programmes d'ordinateurs.

En conséquence, l'invention vise aussi un programme d'ordinateur sur un support d'informations, ce programme étant susceptible d'être mis en oeuvre dans une passerelle domestique ou plus généralement dans un ordinateur, ce programme comportant des instructions adaptées à la mise en oeuvre des étapes d'un procédé de traduction d'adresses tel que décrit ci-dessus.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 1, déjà décrite, présente de façon schématique un réseau de télécommunication mettant en oeuvre la fonction de NAT opérateur selon l'art antérieur;
- les figures 2A et 2B présentent deux exemples de masques de numéros de port selon l'invention;
- la figure 3 présente de façon schématique une pluralité d'équipements terminaux connectés à un réseau de télécommunications d'un opérateur selon l'invention;
- la figure 4 présente un procédé de routage d'un paquet de données dans un réseau de télécommunications selon l'invention;
- la figure 5 présente un équipement du réseau de télécommunications mettant en oeuvre le procédé de routage selon l'invention, dans son environnement;
- la figure 6 présente de façon schématique un mode de réalisation de l'invention, selon lequel l'identifiant de routage est un identifiant de route dédiée à l'équipement terminal destinataire du paquet de données;
- la figure 7 présente de façon schématique le procédé de configuration d'un équipement terminal selon l'invention;
- la figure 8 présente de façon schématique un équipement terminal mettant en oeuvre le procédé de mise en oeuvre d'une configuration selon l'invention, dans son environnement;
- la figure 9 présente un procédé de mise en oeuvre d'une configuration d'un équipement terminal selon l'invention; et
- la figure 10 présente de façon schématique une passerelle domestique mettant en oeuvre le procédé de mise en oeuvre d'une configuration selon l'invention, dans son environnement.

### Description d'un mode de réalisation particulier de l'invention

Le principe général de l'invention repose sur l'affectation d'une même adresse primaire à une pluralité d'équipements terminaux dans un réseau de télécommunications, ces équipements terminaux étant identifiés de façon unique à partir d'un identifiant de routage et d'un masque de port définissant une plage de numéros de ports qui leur est dédiée.
On notera que le terme d'équipement terminal est général et désigne aussi bien un équipement terminal directement connecté au réseau de télécommunications qu'une passerelle domestique.

Les inventeurs ont constaté qu'un équipement terminal n'utilise pas simultanément les 2¹⁶ (i.e. 65536) valeurs de numéros de ports dont il dispose. Cette plage est en effet surdimensionnée pour les besoins réels d'un client, qui n'utilise que quelques connexions pour des applications de type P2P (*Peer to Peer*), FTP (*File Transfer Protocol*), web browsing, *t*éléphonie, etc.

L'invention consiste à réduire la plage de numéros de ports disponibles pour un équipement terminal par application, en affectant à un équipement terminal un masque de ports définissant une sous partie de cette plage. Le masque de port ainsi attribué à un équipement terminal particulier est utilisé, en combinaison avec son adresse IP primaire, pour router les paquets de données qui lui sont destinés, sans dégradation du service IP..

On notera qu'un fournisseur de service de connectivité IP doit respecter la contrainte suivante, à savoir que deux équipements terminaux ayant la même adresse primaire doivent nécessairement recevoir des masques de ports distincts.

Le fournisseur de service de connectivité peut, par exemple, forcer la valeur du bit de poids fort du champ correspondant au numéro de port source des paquets de données IP émis par un équipement terminal donné. Cet équipement dispose alors d'un masque de ports définissant une plage de 32768 valeurs de numéros de ports possibles.
Le fournisseur peut, selon une variante, forcer la valeur des huit premiers bits de poids fort, de façon à ce que l'équipement terminal dispose d'une plage de 256 numéros de ports utilisables.

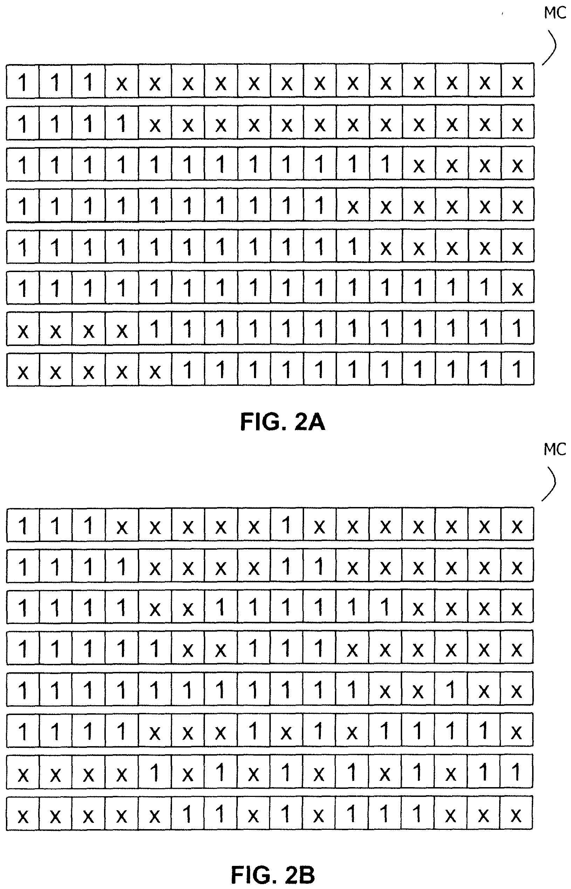

Un numéro de port reste donc codé sur un champ de 16 bits, mais avec une partie du champ forcé par le fournisseur de service de connectivité IP. En relation avec les figures 2A et 2B, on présente deux exemples de masques de numéros de ports selon l'invention: un exemple de masque de type contigu et un exemple de type non contigu
- Un masque contigu est un masque qui utilise un ensemble adjacent de bits (représentation binaire du champ port). Cette variante est simple à mettre en oeuvre et ne requiert pas d'intelligence de traitement et d'implémentation pour les équipements mettant en oeuvre l'invention. La plage associée à un masque contigu est une plage continue et unique. Les valeurs autorisées sont comprises dans un seul intervalle.
- Un masque non contigu est un masque qui utilise des bits non adjacents. La plage de ports résultante peut être définie par l'union de plusieurs « petite » plage continue. L'avantage de cette deuxième variante est la possibilité d'affecter la plage des ports par défaut à plusieurs équipements terminaux en même temps.

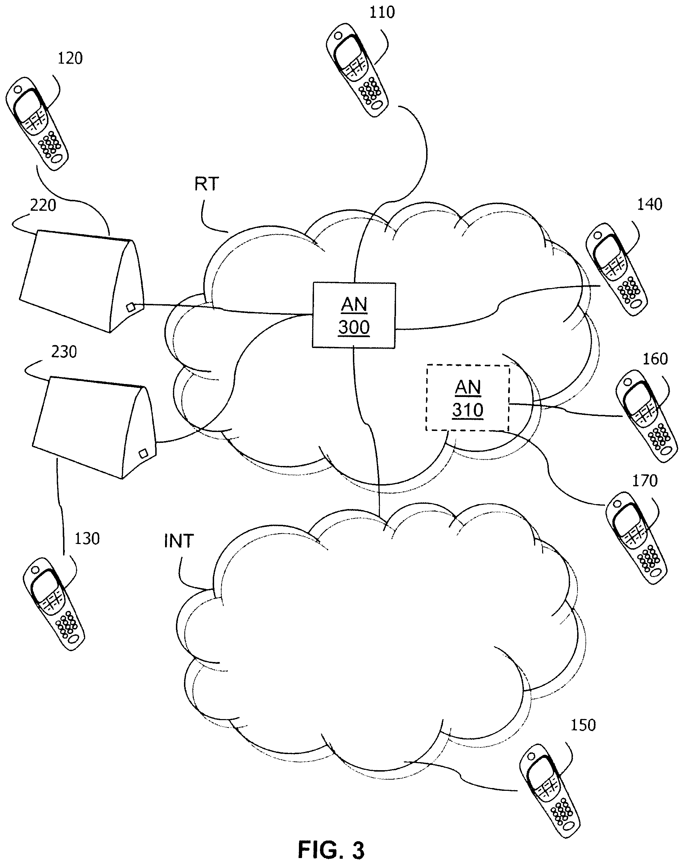

On présente, en relation avec la **figure 3****,** un réseau de télécommunications RT d'un opérateur sur lequel un fournisseur de service a déployé une architecture de service de connectivité ou d'accès IP. Une pluralité d'équipements terminaux disposent d'un accès à ce réseau. Dans la suite, on désignera par équipement terminal aussi bien les équipements terminaux 110, 120, 130, 140, 160, 170 tels que, par exemple, des téléphones ou des ordinateurs personnels, connectés directement au réseau RT qu'une passerelle domestique 230, 220 placée en coupure de flux entre un réseau domestique et le réseau de télécommunications RT.

Une telle passerelle dispose d'une table de traduction d'adresses ou table de Nattage, qui fait correspondre à une adresse privée et un premier numéro de port d'un équipement terminal de son réseau privé au moins sa propre adresse publique et un deuxième numéro de port.

De façon avantageuse, le réseau de télécommunications RT de l'opérateur comprend au moins un dispositif de routage AN 300 mettant en oeuvre le procédé de routage d'un paquet de données selon l'invention. On notera qu'il peut en comprendre plusieurs autres, tels que le dispositif de routage 310.

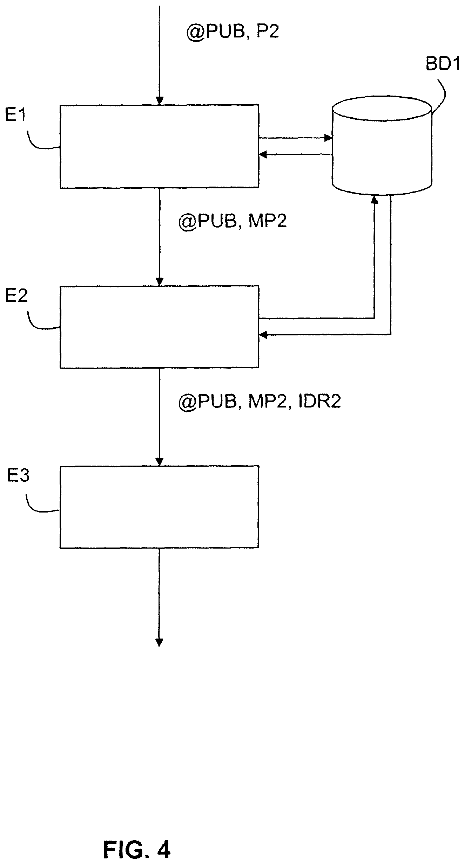

Ce procédé de routage va maintenant être décrit en relation avec la **figure 4****.** Sur réception d'un paquet de données PT comprenant une adresse publique de destination @PUB et un numéro de port de destination P2, le procédé de routage selon l'invention met en oeuvre une étape E1 de détermination d'un masque de ports définissant une plage de numéros de ports à laquelle appartient le numéro de port P2. Les masques de ports affectés aux équipements terminaux du réseau peuvent avantageusement être stockés dans une base de données BD1. En E2, ce masque de ports MP est utilisé pour sélectionner un équipement destinataire du paquet PT parmi une pluralité d'équipements terminaux ayant la même adresse publique P2, et l'identifier à l'aide de son identifiant de routage IDR. Le paquet est ensuite routé en E3 vers l'équipement destinataire sélectionné à partir de son identifiant de routage IDR. Si le dispositif de routage AN 300 ne dispose pas d'entrée dans ses tables de routage, le paquet en question est supprimé.

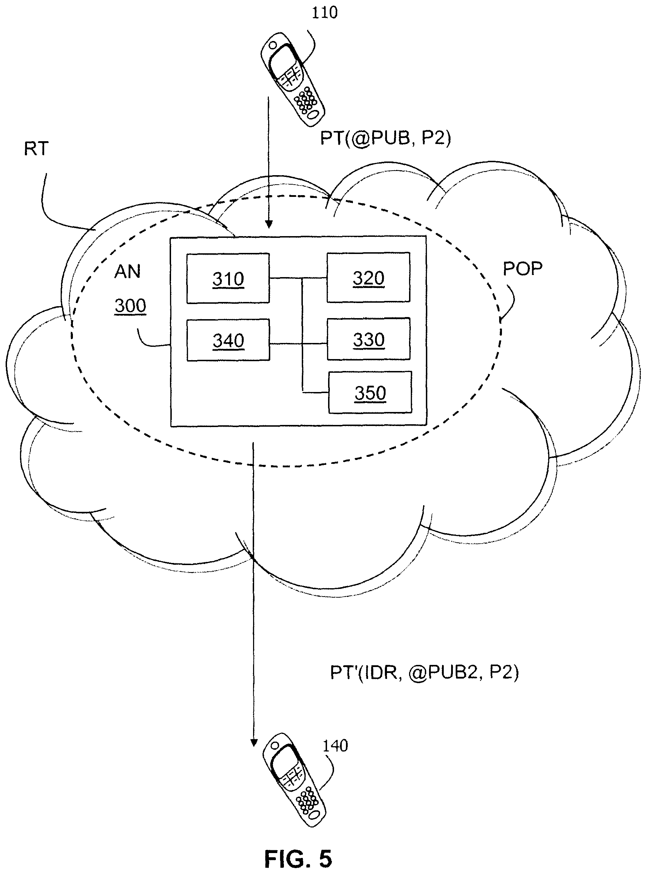

Dans le mode de réalisation décrit en relation avec la **figure 5****,** le dispositif de routage AN 300 selon l'invention comporte les éléments matériels que l'on retrouve classiquement dans un ordinateur conventionnel, à savoir un processeur 310, une mémoire vive de type RAM 320, une mémoire morte de type ROM 330 et des moyens 340 de télécommunications avec le réseau 1.

Conformément à l'invention, le dispositif de routage AN 300 comporte une mémoire 350 comprenant une base de données dans laquelle il sauvegarde l'association entre l'adresse publique @PUB, le masque de ports MP et l'identifiant de routage IDR de l'équipement terminal 100. On notera que cette mémoire peut aussi bien être externe au dispositif pourvu qu'il puisse y accéder pour récupérer les données d'identification de l'équipement terminal destinataire du paquet de données reçu.

La mémoire morte 330 constitue un support d'enregistrement conforme à l'invention. Ce support mémorise un programme d'ordinateur conforme à l'invention, ce programme comportant des instructions pour l'exécution des étapes du procédé de routage conforme à l'invention qui vient d'être décrit en référence à la **figure 4****.**

Le dispositif de routage AN selon l'invention a pour principale fonction de maintenir une table de correspondance entre l'identifiant de routage IDR et le couple (adresse IP publique @PUB, masque de ports MP) de façon à pouvoir déterminer de façon non ambigüe à quel équipement terminal doit être transmis le paquet de données comprenant l'adresse de destination @PUB partagée par plusieurs équipements terminaux. Le dispositif AN peut être localisé dans un PoP (*Point of Presence*) d'accès au réseau de télécommunications RT ou être centralisé. Il peut être hébergé par un routeur ou par un équipement dédié.

L'adresse primaire @*PUB* d'un équipement terminal est annoncée par le dispositif de routage AN, par exemple à l'aide du protocole de routage intra-domaine IGP (Interior Gateway Protocol, en anglais) tels que RIP (Routing Information Protocol), IS-IS (Intermediate System to Intermediate System) ou OSPF (Open Shortest Path First). Ceci permet de forcer le passage des paquets IP destinés à toute adresse IP publique, affectée comme adresse principale à au moins deux équipements terminaux.

Selon un premier mode de réalisation de l'invention, l'identifiant de routage IDR est une adresse privée ou encore appelé secondaire de l'équipement terminal. Une telle adresse n'est pas annoncée par le dispositif de routage AN. Par conséquent, elle n'est pas routable dans le coeur de réseau RT. Elle n'est pas non plus joignable depuis internet. Dans le cas où le dispositif AN se trouve dans un POP d'accès au réseau RT, sa portée est limitée aux échanges entre l'équipement terminal et les équipements constituants ledit POP.

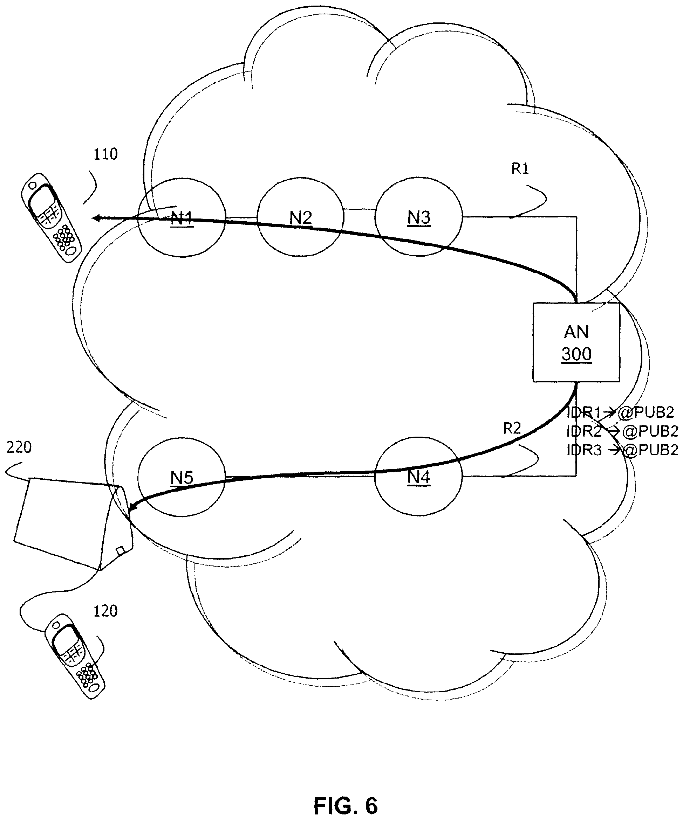

En relation avec la **figure 6****,** on présente maintenant un deuxième mode de réalisation du procédé de routage selon l'invention. Selon ce mode de réalisation, l'identifiant de routage IDR est un identifiant de route dédiée à l'équipement terminal. Un tel identifiant désigne de façon unique une route qui dessert l'équipement terminal de façon unique et non ambigüe. Ceci est réalisable part exemple à l'aide de routes disjointes. Deux routes R1 et R2 sont dites disjointes si aucun des noeuds constituants la route R1 dans le réseau de l'opérateur n'est traversé au titre de la route R2. Ainsi, les routes R1 et R2 sont constituées par une succession de noeuds, aucun de ces noeuds n'étant partagé entre ces deux routes. Pour ce faire, la topologie du réseau de télécommunications sous jacent doit être construite de telle façon à permettre l'installation de routes disjointes dans la table de routage maintenue par le dispositif de routage AN selon l'invention.

On comprend que, selon l'invention, l'équipement terminal 100 et le dispositif de routage AN 300 doivent être configurés préalablement à toute connexion au réseau.

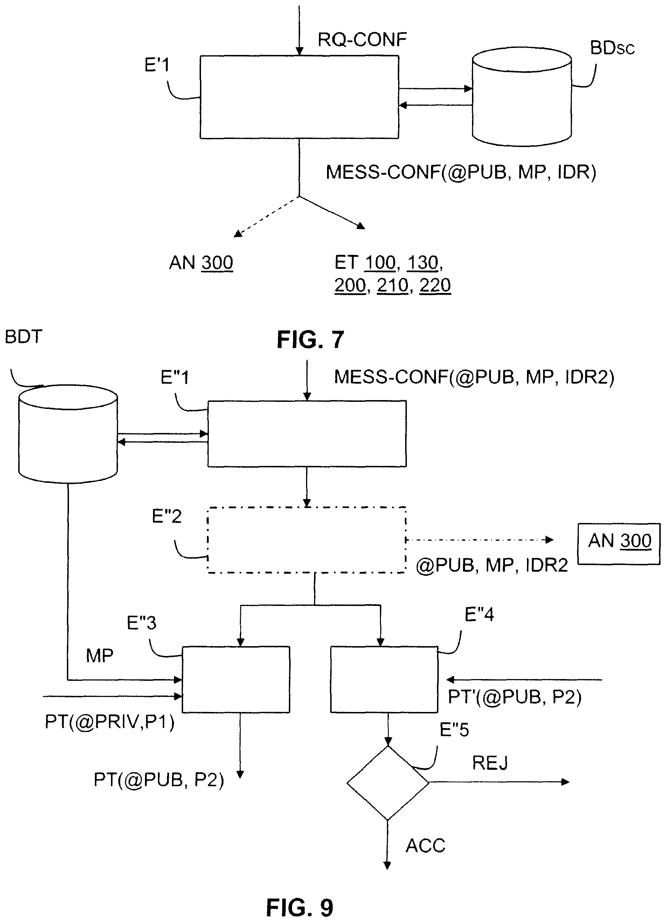

Le procédé de configuration d'un équipement terminal selon l'invention va maintenant être décrit en relation avec la **figure 7****.** Lorsqu'il se connecte au réseau de télécommunications RT de l'opérateur, par exemple suite à sa mise sous tension, l'équipement terminal 100, 200, 210, 220, 130, envoie de façon connue, une requête de configuration au service de connectivité IP du fournisseur de service. Une telle requête RQ-CONF est reçue par un serveur de configuration SC qui lui fournit en retour les données de configuration nécessaires à la mise en oeuvre de son service de connectivité IP.

Il peut s'agir, par exemple, d'une requête DHCP_DISCOVER() selon le protocole DHCP diffusée en mode *broadcast* dans le réseau de télécommunications du fournisseur de service IP. Ce message peut être relayé par un client relais DHCP (*DHCP Client Relay*) ou être reçu directement par un serveur de configuration DHCP. Sur réception de ce message, un serveur de configuration DHCP répond à l'émetteur du message DHCP_DISCOVER() par un message dédié DHCP_OFFER() contenant un bail DHCP.

Selon l'invention, le procédé de configuration mis en oeuvre par le serveur de configuration SC sur réception de la requête de configuration RQ-CONF. Une étape E"1 consiste à affecter une adresse publique audit équipement terminal, ladite adresse publique étant partagée avec une pluralité d'équipements terminaux. Une étape E"2 consiste ensuite à affecter audit équipement terminal un masque de ports MP définissant une plage de numéros qui lui est dédiée et un identifiant de routage IDR. De telles données de configuration @PUB, IDR et MP sont enfin envoyées audit équipement terminal dans un message de configuration MESS-CONF..

Selon un aspect de l'invention, le serveur de configuration désigne un dispositif de routage AN 300 d'attachement pour l'équipement terminal. Les données de configuration sont aussi envoyées à ce dispositif de routage AN 300 par le serveur de configuration SC. Dans ce cas, le message de configuration MESS-CONF comprend en outre un identifiant du dispositif de routage d'attachement AN 300.

Lorsque la configuration se fait auprès d'un serveur DHCP, le message de configuration MESS-CONF est une offre de type DHCP_OFFER() qui contient les données de configuration IP relatives à la configuration de l'équipement terminal en ayant fait la demande. De telles données comportent au moins les éléments suivants:
- une adresse secondaire IPV4 @PRIV;
- une adresse primaire IPV4 @PUB ;
- un masque de port MP, qui fait l'objet d'une nouvelle option DHCP selon le format suivant ;

| Code | Len | Val |
|---|---|---|
| TBA | variable | MP |

∘ *Code* : ce champ renseigne le code de l'option. La valeur de ce champ doit être attribuée par IANA (*Internet Assigned Numbers Authority*). La longueur de ce champ est de 1 octet;
∘ *Len* : Ce champ renseigne la longueur de la valeur de l'option. Dans le cas de l'option masque de ports, la valeur de ce champ est égale à "variable" ;
∘ *Val* : Ce champ renseigne la valeur du masque de ports. Cette valeur est codée comme le champ "port" des protocoles de transport IP. La valeur MP est utilisée pour déterminer la plage des numéros de ports utilisables par une passerelle domestique.

- L'identifiant de dispositif de routage AN d'attachement peut être dans ce cas, un identifiant a.b.c.d égal à son adresse IP ou à son nom de domaine FQDN (*Fully Qualified Domain Name*). Il fait lui aussi l'objet d'une nouvelle option DHCP. Le format de l'option de dispositif de routage d'attachement (DAN) est le suivant :

| Code | Len | Val |
|---|---|---|
| TBA | 4 | DAN |

∘ *Code* : ce champ renseigne le code de l'option. La valeur de ce champ doit être attribuée par IANA (*Internet Assigned Numbers Authority*). La longueur de ce champ est de 1 octet;
∘ *Len* : Ce champ renseigne la longueur de la valeur de l'option. Dans le cas de l'option dispositif de routage d'attachement (DAN), la valeur de ce champ est égale à "4" ;
∘ *Val* : Ce champ renseigne la valeur du paramètre DAN. Cette valeur est codée sous forme d'une adresse IP.

Les serveurs de configuration DHCP doivent être modifiés pour mettre en oeuvre l'invention et notamment affecter ces nouvelles données de configuration à tout équipement terminal, par exemple une passerelle domestique, demandant un accès de connectivité IP.

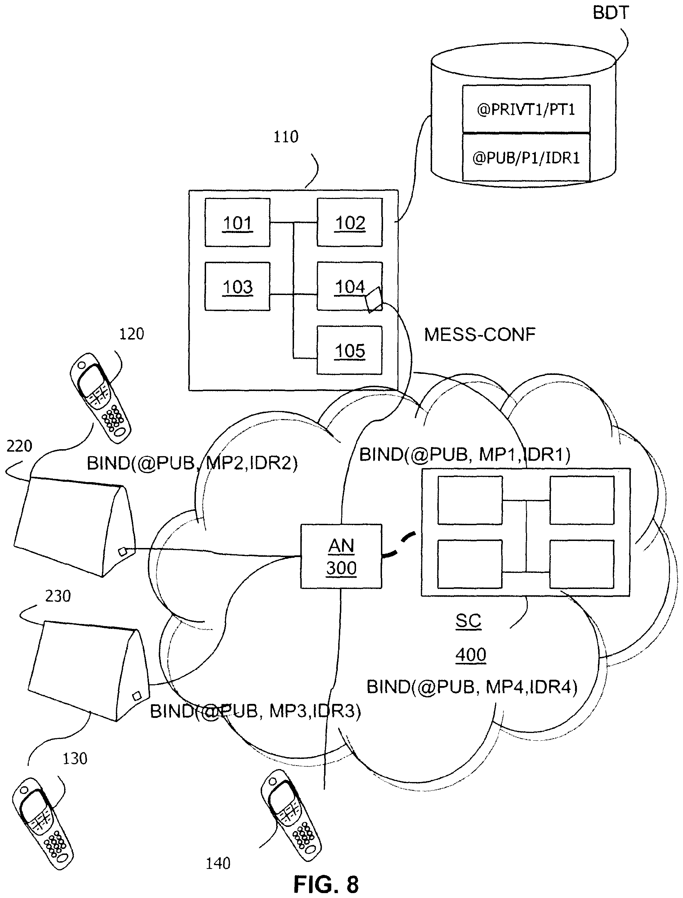

Dans le mode de réalisation décrit en relation avec la **figure 8****,** le serveur de configuration SC 400 selon l'invention comporte les éléments matériels que l'on retrouve classiquement dans un ordinateur conventionnel, à savoir un processeur 410, une mémoire vive de type RAM 420, une mémoire morte de type ROM 430 et des moyens 440 de télécommunications avec le réseau 1.

Conformément à l'invention, le serveur de configuration SC 400 comporte une mémoire 450 comprenant une base de données dans laquelle il sauvegarde les données de configuration des équipements terminaux qu'il gère, notamment l'association entre l'adresse primaire @PUB, le masque de ports MP et l'identifiant de routage IDR de l'équipement terminal 100. On notera que cette mémoire peut aussi bien être externe au serveur de configuration pourvu qu'il puisse y accéder pour récupérer les données de configuration de l'équipement terminal émetteur de la requête de configuration.

En réponse à une requête de configuration envoyée au serveur de configuration SC 400, l'équipement terminal selon l'invention reçoit le message de configuration MESS-CONF comprenant les données de configuration de sa connectivité IP au réseau de télécommunications RT. Sur réception de ce message, il exécute le procédé de mise en oeuvre d'une configuration selon l'invention, qui va maintenant être décrit en référence à la **figure 9****.** Dans une étape E"1, il enregistre les données de configurations reçues dans une base de données BDT. Lorsqu'il souhaite envoyer un paquet de données PT dans le réseau de télécommunications RT, il sélectionne en E"3 un port P2 dans la plage de numéros de ports définie par le masque de ports PT et affecte au paquet de données PT un port source correspondant au port P2.

Sur réception d'un paquet de données PT' en provenance du réseau de télécommunications, il met en oeuvre une étape E"4 de vérification d'une appartenance d'un port P'2 dudit paquet au masque de port MP et rejette le paquet en E"5 si la vérification est négative.

Selon une variante, il comprend en outre une étape E"2 d'envoi des données de configuration à l'équipement AN 300 du réseau de télécommunications RT comprenant le dispositif de routage selon l'invention.

On comprend donc que le dispositif de routage selon l'invention peut être configuré soit par l'intermédiaire de l'équipement terminal, soit directement par le serveur de configuration SC 400.

Le premier cas s'applique, lorsque l'identifiant de routage IDR est une adresse secondaire @PRIV. L'équipement terminal, après avoir activé la nouvelle configuration reçu dans le message de configuration MESS-CONF, qui peut être un bail DHCP, génère un message de configuration, que nous appelons BIND(), destiné au dispositif de routage AN selon l'invention. Ce dispositif est identifié par l'adresse DAN dans le message MESS-CONF. Le message BIND(@PRIV, @PUB, MP) comprend au moins l'adresse principale de l'équipement terminal, son identifiant de routage IDR et son masque de ports. De façon avantageuse, il comprend en outre un identifiant du dispositif de routage apte à router vers l'équipement terminal les paquets de données qui lui sont destinés. Il est émis par l'équipement terminal avec une adresse source égale à @PRIV. Sur réception de ce message, le dispositif de routage AN envoie un acquittement à l'équipement terminal émetteur à l'aide d'un message d'acquittement.

Lorsque l'identifiant de routage IDR est un identifiant de route dédiée à l'équipement terminal, deux variantes pour l'envoi du message BIND() peuvent être envisagées. Dans les deux cas, le serveur de configuration SC connaît l'ensemble des routes maintenues par le dispositif de routage AN :
- Selon la première, le message BIND() est avantageusement transmis au dispositif de routage AN par le serveur de configuration SC. On notera que, dans ce deuxième cas, le serveur de configuration envoie le message BIND() et que ce message comprend l'adresse principale @PUB, le masque de port MP et l'identifiant de la route à utiliser. Sur réception de ce message, le dispositif de routage selon l'invention associe, en consultant sa table de routage avec routes disjoints préinstallées, un identifiant de route spécifique à l'équipement IDR et (@PUB, MP) reçu.
- Selon la deuxième, l'identifiant de la route à utiliser est envoyé par SC au même titre que @PUB et MP. Le terminal envoie un message BIND() contenant les informations suivantes : @PUB, MP et IDR. Néanmoins, noue ne recommandons pas cette deuxième variante car le client ne doit pas être au courant des politiques de routage telles que installées par le fournisseur de service.
En relation avec la **figure 8**, on considère le contenu des messages BIND() envoyés au dispositif de routage AN 300 par les équipements terminaux suivants :
- L'équipement terminal 110 envoie le message BIND(@PUB1, MP1, IDR1);
- La passerelle domestique 220 de l'équipement terminal 120 envoie le message BIND(@PUB2, MP2, IDR2);
- La passerelle domestique 230 de l'équipement terminal 130 envoie le message BIND(@PUB3, MP3, IDR3);
- L'équipement terminal 140 envoie le message BIND(@PUB4, MP4, IDR4).
Une fois le message BIND() reçu par le dispositif de routage AN selon l'invention, ce dernier procède à l'instanciation d'une nouvelle entrée dans une table d'associations (ou de *bindings*). Ladite table permet de déterminer sans ambiguïté parmi l'ensemble de machines gérées par le dispositif de routage AN et ayant la même adresse principale @ PUB, celle vers laquelle il faut transmettre un message destinée à ladite adresse IP donnée (i.e. @PUB) ayant été affectée comme adresse principale.
Pour ce faire, le dispositif de routage AN maintient l'association (IDR, (@PUB, MP)). Dans le cadre de l'exemple de la **figure 8**, la table des associations contient les associations suivantes :
- IDR1, (@PUB, MP1)
- IDR2, (@PUB, MP2)
- IDR3, (@PUB, MP3)
- IDR4, (@PUB, MP1)

Dans une variante d'implémentation, la signature du message BIND() peut contenir une durée de vie telle que renseignée dans le bail DHCP. De plus, une association installée dans la table des association peut être rafraichie à l'aide d'autres messages BIND(). Si aucune mise à jour n'est reçue avant l'écoulement de la durée de vie, l'entrée correspondante est supprimée de la liste (une marge de précision peut être envisagée).

Dans une autre variante, le message BIND() peut être envoyé par le serveur de configuration 400 SC et non pas par l'équipement terminal qui vient d'être configuré. Les informations requises par l'installation d'une nouvelle entrée dans la table des associations peuvent être transmises directement par le fournisseur de service au dispositif de routage AN 300 via le serveur de configuration SC 400.
En relation avec la figure 8, on considère l'exemple d'un paquet de données PT (@PUB, P2) émis par l'équipement terminal 110 à destination de l'équipement terminal 120. A la réception de ce paquet destiné à une adresse principale IP @PUB, le dispositif de routage AN procède à la lecture du numéro de port de destination P2 dudit message et déduit le masque de port MP2 correspondant. A l'aide de ce masque et de l'adresse principale @PUB, le dispositif de routage AN détermine, en parcourant sa table des associations, l'identifiant de routage IDR2, par exemple l'adresse secondaire @PRIV2 associée au couple (@PUB, MP2).

Après détermination de l'adresse secondaire, le dispositif de routage AN transforme le paquet IP reçu en un paquet PT'(@PUB, P2, IDR2). Pour des raisons de sécurité, le numéro de port destination à utiliser pour ce paquet PT' est négocié entre l'équipement terminal 120 et le dispositif de routage AN.

On notera que le paquet PT peut être transformé de diverses façons. Selon un premier mode de réalisation, il est encapsulé dans un paquet PT' comprenant, par exemple, comme adresse de destination l'adresse secondaire @PRIV2 de l'équipement terminal destinataire 120.

Selon un deuxième mode de réalisation, le paquet PT est modifié en incluant l'adresse secondaire @PRIV2 dans un champ particulier de son en-tête. Cette transformation du paquet de données permet un mode de routage dit routage à la source. Il n'est pas toujours supporté par les noeuds d'un réseau de télécommunications.

Selon un troisième mode de réalisation, le paquet PT est transformé à l'identique, le routage se faisant à partir de l'identifiant de route dédié IDR2 qui ne nécessite aucune modification du paquet.

Dans le mode de réalisation décrit en relation avec la **figure 8****,** l'équipement terminal 100 selon l'invention comporte les éléments matériels que l'on retrouve classiquement dans un ordinateur conventionnel, à savoir un processeur 110, une mémoire vive de type RAM 120, une mémoire morte de type ROM 130 et des moyens 140 de télécommunications avec le réseau 1.

Conformément à l'invention, l'équipement terminal 100 comporte une mémoire 150 comprenant une base de données dans laquelle il sauvegarde ses données de configuration, notamment l'association entre l'adresse publique @PUB, le masque de ports MP et l'identifiant de routage IDR de l'équipement terminal 100. On notera que cette mémoire peut aussi bien être externe à l'équipement terminal pourvu qu'il puisse y accéder pour récupérer les données de configuration dont il a besoin pour la mise en oeuvre de sa connectivité IP sur le réseau de télécommunications RT.

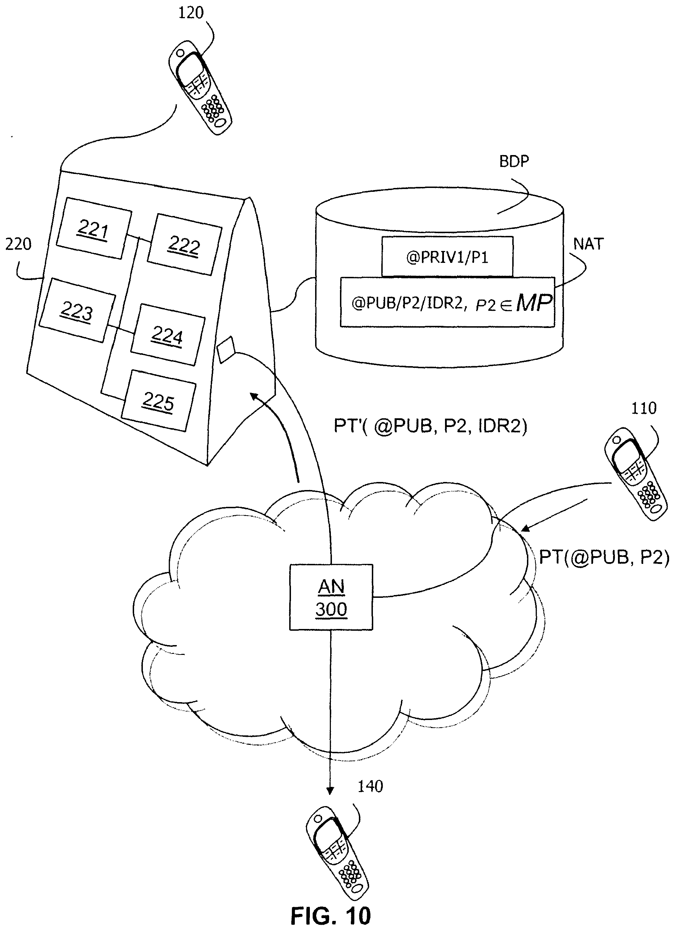

Selon un mode de réalisation de l'invention, décrit en relation avec la **figure 10****,** on considère maintenant un équipement terminal 110 connecté au réseau domestique d'une passerelle domestique 210 placée en coupure de flux de données entre l'équipement terminal 110 et le réseau de télécommunications RT. Dans ce mode de réalisation, la passerelle domestique 210 constitue un équipement terminal selon l'invention. De façon connue, elle comprend une table de traduction d'adresses ou table de Nattage NAT qui fait correspondre, pour un flux émis par un équipement terminal 110 de son réseau domestique, une adresse @PRIV1 et un port P1 de ce terminal dans le réseau domestique à au moins une adresse publique @PUB2 et un port P2 de la passerelle domestique 210 dans le réseau de télécommunications de l'opérateur RT, P2 appartenant à la plage de numéros définies par le masque de ports MP. Cette table NAT est, par exemple, stockée dans une base de données BDP qui peut être interne ou externe.

Une passerelle domestique selon l'invention met donc en oeuvre des moyens de traduction d'adresses sur réception d'un paquet de données PT émis par un équipement terminal de son réseau domestique et adressé au réseau de télécommunications et sur réception d'un paquet de données PT' destiné à cet équipement terminal.

Pour les communications sortantes, la seule différence par rapport aux pratiques existantes est que l'équipement terminal 110 ou la passerelle domestique 120 selon l'invention est obligé de choisir un port source dans la plage fixée par le masque de port affecté par le fournisseur de service. Tous les messages, sauf les messages BIND(), sont émis avec comme adresse source l'adresse principale ou adresse publique @PUB affectée par le fournisseur de service. Pour les messages BIND(), l'adresse source utilisée est l'adresse secondaire IDR2= @PRIV2.

De façon avantageuse, les paquets de données émis par un équipement terminal donné traversent le dispositif de routage AN 300 auquel cet équipement terminal est attaché. Le dispositif de routage AN procède au marquage des paquets de données IP émis par cet équipement terminal. Le champ DS (Differentiated Services) ou ToS (Type of Service) des paquets IP peut être utilisé pour le marquage, si et seulement si le masque du port ne dépasse pas 6 bits. En effet, lors de la réception du message BIND(), le dispositif de routage AN préinstalle une règle de marquage pour les messages émis par l'équipement terminal en question. Le processus d'encapsulation est alors guidé par la valeur du champ DS des paquets IP reçus et donc le dispositif de routage AN n'a plus besoin d'inspecter les informations relatives à la couche transport. Ainsi le temps de traitement des messages sera amélioré. Cette variante suppose que la machine terminale ne modifie pas le code DS/TOS utilisé et qu'il est repositionné à la même valeur pour les paquets réponses.

Le dispositif de routage conforme à l'invention peut être hébergé par des routeurs traditionnels ou par des équipements dédiés. Etant données que les modifications requises par l'invention lors de la phase de découverte d'un serveur de configuration, par exemple selon le protocole DHCP ne sont pas majeures, les architectures actuelles peuvent être adaptées.

Le dispositif de routage AN selon l'invention peut être hébergé n'importe où dans le réseau de télécommunications de l'opérateur. De façon avantageuse, il est déployé au sein d'un POP d'accès au réseau. De plus, un ou plusieurs dispositifs de routage AN peuvent être déployés au sein du même POP d'accès IP, aussi bien de façon centralisée que distribuée.

## Revendications

1. Procédé de routage d'un paquet de données IP dans un réseau de télécommunications, ledit procédé étant mis en oeuvre par un dispositif de routage et comprenant, sur réception d'un paquet comprenant une indication d'adresse primaire de destination différente de l'adresse primaire dudit dispositif de routage, et de numéro de port de destination, les étapes suivantes :
- détermination d'un masque de ports définissant une plage de numéros de ports à laquelle appartient le numéro de port de destination ;
- sélection d'un identifiant d'un équipement destinataire du paquet parmi une pluralité d'identifiants d'équipements associés à ladite adresse primaire de destination à partir du masque de ports ; et
- routage d'un paquet vers l'équipement destinataire à partir dudit identifiant, ladite indication d'adresse primaire de destination étant conservée dans le paquet routé.

2. Procédé de routage d'un paquet de données IP selon la revendication **1, caractérisé en ce que** ledit au moins un identifiant est une adresse secondaire de destination de l'équipement destinataire.

3. Procédé de routage d'un paquet de données IP selon la revendication **2, caractérisé en ce que** le procédé comprend, préalablement à l'étape de routage, une étape de transformation du paquet pour y ajouter ladite adresse secondaire et **en ce que** le paquet est routé à partir de ladite adresse secondaire.

4. Procédé de routage selon la revendication **1, caractérisé en ce que** l'identifiant est un identifiant de route spécifique à cet équipement et **en ce que** le routage du paquet est effectué à partir dudit identifiant de route spécifique.

5. Dispositif de routage d'un paquet de données IP dans un réseau de télécommunications, ledit dispositif étant apte à mettre en oeuvre, sur réception d'un paquet comprenant une indication d'adresse primaire de destination différente de l'adresse primaire dudit dispositif de routage, et de numéro de port de destination, les moyens suivants :
- détermination d'un masque de ports définissant une plage de numéros de ports à laquelle appartient le numéro de port de destination ;
- sélection d'un identifiant d'un équipement destinataire du paquet parmi une pluralité d'identifiants d'équipements associés à ladite adresse primaire de destination à partir du masque de ports ; et
- routage d'un paquet vers l'équipement destinataire à partir dudit identifiant, ladite indication d'adresse primaire de destination étant conservée dans le paquet routé.

6. Equipement dans un réseau de télécommunications, apte à recevoir un paquet de données IP comprenant une adresse primaire de destination et un numéro de port de destination, **caractérisé en ce qu'**il comprend au moins un dispositif de routage selon la revendication 5.

7. Procédé de mise en oeuvre d'une configuration par un équipement terminal connecté à un réseau de télécommunications, ledit procédé comprenant, sur réception d'un message de configuration comprenant des données de configuration parmi lesquelles une adresse publique partagée avec une pluralité d'équipements terminaux, un masque de port définissant une plage de numéros qui lui est dédiée et un identifiant de routage permettant à un dispositif de routage de router les paquets de données à destination dudit équipement terminal, les étapes suivantes :
- enregistrement desdites données de configuration ;
- sélection d'un numéro de port dans la plage de numéros de ports définie par le masque de ports ; et
- envoi par ledit équipement terminal d'un paquet de données dans le réseau de télécommunications, ledit paquet de données comprenant comme numéro de port source le numéro de port sélectionné, et comme adresse source ladite adresse publique dudit équipement terminal.

8. Procédé de mise en oeuvre d'une configuration selon la revendication 7, **caractérisé en ce que**, un identifiant de dispositif de routage apte à router un paquet de données comprenant ladite adresse publique comme adresse de destination vers ledit équipement terminal ayant été reçu, ledit procédé comprend en outre une étape d'envoi des données de configuration audit dispositif de routage.

9. Procédé de mise en oeuvre d'une configuration selon la revendication **7, caractérisé en ce que**, sur réception d'un paquet de données comprenant une adresse de destination publique, un numéro de port et un identifiant de routage, ledit procédé comprend en outre une étape de vérification d'une appartenance du numéro de port à la plage de numéros définie par son masque de port et une étape de rejet dudit paquet si la vérification est négative.

10. Equipement terminal client connecté à un réseau de télécommunications, apte à mettre en oeuvre, sur réception d'un message de configuration comprenant des données de configuration parmi lesquelles une adresse primaire partagée avec une pluralité d'équipements terminaux, un masque de ports définissant une plage de numéros qui lui est dédiée et d'un identifiant de routage permettant à un dispositif de routage de router les paquets de données à destination dudit équipement terminal, les moyens suivants :
- enregistrement desdites données de configuration ;
- sélection d'un numéro de port dans la plage de numéros de ports définie par le masque de ports ; et
- envoi d'un paquet de données dans le réseau de télécommunications, ledit paquet de données comprenant comme numéro de port source le numéro de port sélectionné, et comme adresse source l'adresse primaire dudit équipement terminal.

11. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de routage selon la revendication **1.**

12. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de mise en oeuvre d'une configuration selon la revendication **7.**

## Patentansprüche

1. Verfahren zum Routen eines IP-Datenpakets in einem Telekommunikationsnetzwerk, wobei das Verfahren durch eine Routing-Einrichtung implementiert wird und beim Empfang eines Pakets, das eine Angabe einer primären Zieladresse, die sich von der primären Adresse der Routing-Einrichtung unterscheidet, und einer Zielportnummer umfasst, die folgenden Schritte umfasst:
- Bestimmung einer Portmaske, die einen Portnummernbereich definiert, zu dem die Zielportnummer gehört;
- Auswahl einer Kennung eines Zielgeräts des Pakets aus einer Vielzahl von Gerätekennungen, die anhand der Portmaske mit der primären Zieladresse verknüpft sind; und
- Routen eines Pakets zu dem Zielgerät anhand der Kennung, wobei die Angabe der primären Zieladresse im gerouteten Paket erhalten bleibt.

2. Verfahren zum Routen eines IP-Datenpakets nach Anspruch 1 **dadurch gekennzeichnet, dass** die zumindest eine Kennung eine sekundäre Zieladresse des Zielgeräts ist.

3. Verfahren zum Routen eines IP-Datenpakets nach Anspruch 2 **dadurch gekennzeichnet, dass** das Verfahren vor dem Schritt, in dem das Routen stattfindet, einen Schritt umfasst, in dem das Paket transformiert wird, indem diesem die sekundäre Adresse hinzugefügt wird, und dadurch, dass das Paket anhand der sekundären Adresse geroutet wird.

4. Verfahren zum Routen nach Anspruch 1 **dadurch gekennzeichnet, dass** die Kennung eine für dieses Gerät spezifische Routenkennung ist, und dadurch, dass das Routen des Pakets anhand der spezifischen Routenkennung erfolgt.

5. Einrichtung zum Routen eines IP-Datenpakets in einem Telekommunikationsnetzwerk, wobei die Einrichtung geeignet ist, beim Empfang eines Pakets, das eine Angabe einer primären Zieladresse, die sich von der primären Adresse der Routing-Einrichtung unterscheidet, und einer Zielportnummer umfasst, die folgenden Mittel zu implementieren:
- Bestimmung einer Portmaske, die einen Portnummernbereich definiert, zu dem die Zielportnummer gehört;
- Auswahl einer Kennung eines Zielgeräts des Pakets aus einer Vielzahl von Gerätekennungen, die anhand der Portmaske mit der primären Zieladresse verknüpft sind; und
- Routen eines Pakets zu dem Zielgerät anhand der Kennung, wobei die Angabe der primären Zieladresse im gerouteten Paket erhalten bleibt.

6. Gerät in einem Telekommunikationsnetzwerk, das geeignet ist ein IP-Datenpaket zu empfangen, das eine primäre Zieladresse und eine Zielportnummer umfasst, **dadurch gekennzeichnet, dass** es zumindest eine Routing-Einrichtung nach Anspruch 5 umfasst.

7. Verfahren zum Implementieren einer Konfiguration durch ein Endgerät, das mit einem Telekommunikationsnetzwerk verbunden ist, wobei das Verfahren beim Empfang einer Konfigurationsnachricht, die Konfigurationsdaten umfasst, wie unter anderem eine mit einer Vielzahl von Endgeräten geteilte, öffentliche Adresse, eine Portmaske, die einen ihr eindeutig zugeordneten Nummernbereich definiert, und eine Routing-Kennung, die es einer Routing-Einrichtung ermöglicht, die Datenpakete zu dem Endgerät zu routen, die folgenden Schritte umfasst:
- Speicherung der Konfigurationsdaten;
- Auswahl einer Portnummer aus dem durch die Portmaske begrenzten Portnummernbereich; und
- Senden eines Datenpakets im Telekommunikationsnetzwerk durch das Endgerät, wobei das Datenpaket als Quellportnummer die ausgewählte Portnummer und als Quelladresse die öffentliche Adresse des Endgeräts umfasst.

8. Verfahren zum Implementieren einer Konfiguration nach Anspruch 7 **dadurch gekennzeichnet, dass**, nachdem eine Kennung der Routing-Einrichtung empfangen wurde, die geeignet ist, ein die öffentliche Adresse als Zieladresse umfassendes Datenpaket zu dem Endgerät zu routen, das Verfahren unter anderem einen Schritt des Sendens der Konfigurationsdaten an die Routing-Einrichtung umfasst.

9. Verfahren zum Implementieren einer Konfiguration nach Anspruch 7 **dadurch gekennzeichnet, dass** beim Empfang eines Datenpakets, das eine öffentliche Zieladresse, eine Portnummer und eine Routing-Kennung umfasset, das Verfahren unter anderem einen Schritt, in dem verifiziert wird, ob die Portnummer zum durch die Portmaske definierten Nummernbereich gehört, und einen Schritt, in dem das Paket verworfen wird, falls die Verifikation negativ ausfällt, umfasst.

10. Client-Endgerät, das mit einem Telekommunikationsnetzwerk verbunden und geeignet ist, beim Empfang einer Konfigurationsnachricht, die Konfigurationsdaten umfasst, wie unter anderem eine mit einer Vielzahl von Endgeräten geteilte, primäre Adresse, eine Portmaske, die einen ihr eindeutig zugeordneten Nummernbereich definiert, und eine Routing-Kennung, die es einer Routing-Einrichtung ermöglicht, die Datenpakete zu dem Endgerät zu routen, die folgenden Mittel zu implementieren:
- Speicherung der Konfigurationsdaten;
- Auswahl einer Portnummer aus dem durch die Portmaske begrenzten Portnummernbereich; und
- Senden eines Datenpakets im Telekommunikationsnetzwerk, wobei das Datenpaket als Quellportnummer die ausgewählte Portnummer und als Quelladresse die primäre Adresse des Endgeräts umfasst.

11. Computerprogrammprodukt, das aus einem Kommunikationsnetzwerk herunterladbar ist und/oder auf einem computerlesbaren Datenträger gespeichert ist und/oder durch einen Mikroprozessor ausführbar ist, **dadurch gekennzeichnet, dass** es Programmcodeanweisungen zur Ausführung des Verfahrens zum Routen nach Anspruch 1 umfasst.

12. Computerprogrammprodukt, das aus einem Kommunikationsnetzwerk herunterladbar ist und/oder einem auf computerlesbaren Datenträger gespeichert ist und/oder durch einen Mikroprozessor ausführbar ist, **dadurch gekennzeichnet, dass** es Programmcodeanweisungen zur Ausführung des Verfahrens zum Implementieren einer Konfiguration nach Anspruch 7 umfasst.

## Claims

1. Method of routing an IP data packet in a telecommunications network, said method being implemented by a routing device and comprising on reception of a packet comprising a primary destination address indication different from the primary address of the routing device and a destination port number, the following steps:
determining a ports mask defining a range of port numbers to which the destination port number belongs;
selecting at least one identifier of a destination equipment of the packet from a plurality of equipment identifiers associated with said primary destination address based on the ports mask; and
routing the packet to the destination equipment based on said identifier, said primary destination address indication being kept in said routed packed.

2. Method of routing an IP data packet according to claim 1, **characterized in that** said at least one identifier is a secondary destination address of the destination equipment.

3. Method of routing an IP data packet according to claim 2, **characterized in that** it comprises, before the routing step, a step of transforming the packet by adding said secondary address to the packet, and routing the packet based on said secondary destination address.

4. Routing method according to claim 1, **characterized in that** the at least one identifier is a route identifier specific to said equipment and the packet is routed based on said specific route identifier.

5. Device for routing an IP data packet in a telecommunications network, said device being capable of implementing, on reception of a packet comprising a primary destination address indication different from the primary address of the routing device and a destination port number, the following means:
determination of a ports mask defining a range of ports numbers to which the destination port number belongs;
selection of an identifier of a destination equipment of the packet from a plurality of equipments identifiers associated with said primary destination address based on the ports mask; and
routing a packet to the destination equipment based on said identifier, said destination primary address indication being kept in said routed packed.

6. Telecommunications network equipment adapted to receive an IP data packet comprising a primary destination address and a destination port number, **characterized in that** it comprises at least one routing device as defined in claim 5.

7. Method of implementing a configuration by a terminal equipment connected to a telecommunications network, said method comprising, on reception of a configuration message comprising configuration data comprising a public address shared with a plurality of terminal equipments, a port mask defining a range of numbers that is dedicated thereto, and a routing identifier allowing a routing device to route the data packets to destination of said terminal equipment, comprising the following steps:
- storing said configuration data; and
- selecting a port number in the range of ports numbers defined by the ports mask; and
- sending by said terminal equipment of a data packet in the telecommunication network, said data packet comprising as source port number the selected port number and as source address the public address of said terminal equipment.

8. Configuration method according to claim 7, **characterized in that** once an identifier of a routing device adapted to route a data packet comprising said public address as the destination address to said terminal equipment has been received, said method further comprises a step of sending the configuration data to said routing device.

9. Configuration method according to claim 7, **characterized in that**, on reception of a data packet comprising a public destination address, a port number, and a routing identifier, said method further comprises a step of verifying that the port number belongs to the range of port numbers defined by the port mask, and a step of rejecting said packet if result of the verification is negative.

10. Client terminal equipment connected to a telecommunications network capable of implementing, on reception of a configuration message comprising configuration data comprising a primary address shared with a plurality of terminal equipments, a ports mask defining a range of numbers that is dedicated to the client terminal equipment, and a routing identifier allowing a routing device to route the data packets to destination of said terminal equipment, the following means:
- storing said configuration data;
- selecting a port number in the range of ports numbers defined by the ports mask;
- sending a data packet in said telecommunication network, said data packet comprising as source port number the selected port number and as source address the primary adress of said terminal equipment.

11. Computer program product downloadable from a communication network and/or stored on a computer readable medium and/or executable by a microprocessor, **characterized in that** it comprises program code instructions for performing the routing method according to claim 1.

12. Computer program product downloadable from a communication network and/or stored on a computer readable medium and/or executable by a microprocessor, **characterized in that** it comprises program code instructions for performing the configuration implementing method according to claim 7.
